# EUROPÄISCHE PATENTANMELDUNG

(11) **EP 1 514 789 A2**
(43) Veröffentlichungstag der Anmeldung: **16.03.2005**
(21) Anmeldenummer: 04021635.0
(22) Anmeldetag: 10.09.2004
(51) Int. Cl.: B62K 27/12, B62K 13/02

(54) **Abschleppstange zum Ankoppeln eines Kinderfahrrads an ein Erwachsenenfahrrad**

(30) Priorität: 11.09.2003 DE 10342225
(71) Anmelder: Inter-Union Technohandel GmbH, 76829 Landau (DE)
(72) Erfinder: Sandner, Gerhard, 67454 Hassloch (DE)
(74) Vertreter: Bittner, Thomas L., Dr.

(57) **Zusammenfassung**

Die Erfindung betrifft eine Abschleppstange (1) zum Ankoppeln eines Kinderfahrrads an ein Erwachsenenfahrrad mit Befestigungsmitteln (2) zum Befestigen an dem Erwachsenenfahrrad und Ankoppelmitteln zum Ankoppeln des Kinderfahrrads. Die Befestigungsmittel (2) sind in einem befestigten Zustand um eine Sattelstütze des Erwachsenenfahrrads drehbar befestigt.

## Beschreibung

Die Erfindung betrifft eine Abschleppstange zum Ankoppeln eines Kinderfahrrads an ein Erwachsenenfahrrad mit Befestigungsmitteln zum Befestigen an dem Erwachsenenfahrrad und Ankoppelmitteln zum Ankoppeln des Kinderfahrrads.

Um als Erwachsener gemeinsam mit Kindern, die bereits selbständig ein Kinderfahrrad fahren können, größere Strecken zurücklegen zu können, ist es von Vorteil, das Kinderfahrrad an ein Erwachsenenfahrrad ankoppeln zu können, wenn das Kind ermüdet. Aus dem Stand der Technik sind Abschleppstangen bekannt, die an einem Ende mit Befestigungsmitteln an dem Erwachsenenfahrrad befestigt sind und an einem anderen Ende mit Ankoppelmitteln vorne am Rahmen des Kinderfahrrads angekoppelt sind. Im angekoppelten Zustand besitzt das Vorderrad des Kinderfahrrads keinen Kontakt mehr mit der Fahrebene. Um sicher fahren zu können, müssen zwischen dem Erwachsenenfahrrad und dem Kinderfahrrad Drehbewegungen zum einen um eine im wesentlichen senkrecht auf der Fahrebene stehende Achse zum Ermöglichen einer Kurvenfahrt und zum anderen um eine im wesentlichen parallel zur Fahrebene ausgerichtete Achse zum Ausgleichen von Fahrbahnunebenheiten möglich sein. Eine Drehbewegung um die Längsachse der Abschleppstange darf nicht auftreten, um ein Umkippen des Kinderfahrrads auszuschließen.

Bei den bekannten Abschleppstangen sind zwei nahe zueinander benachbarte Drehgelenke nahe an den Befestigungsmitteln angeordnet, mit denen die Abschleppstange an dem Erwachsenenfahrrad befestigt ist.

Um die Abschleppstange an unterschiedliche Größen des Erwachsenenfahrrads sowie unterschiedliche Größen des Kinderfahrrads anpassen zu können, so daß das Vorderrad des Kinderfahrrads jeweils eine angemessene Bodenfreiheit über der Fahrebene aufweist, sind die bekannten Abschleppstangen teleskopartig verlänger- bzw. verkürzbar. Bei manchen bekannten Abschleppstangen ist zusätzlich zu einer Befestigung der Abschleppstange an einer Sattelstütze des Erwachsenenfahrrads bzw. an dem Rahmenabschnitt zum Aufnehmen der Sattelstütze eine Abstützung auf einem Gepäckträger erforderlich. Diese Abschleppstangen sind nur mit Fahrrädern verwendbar, die einen Gepäckträger aufweisen.

Aufgabe der Erfindung ist es, eine verbesserte Abschleppstange zum Ankoppeln eines Kinderfahrrads an ein Erwachsenenfahrrad zu schaffen, die eine verbesserte Stabilität und Handhabbarkeit aufweist.

Die Aufgabe wird erfindungsgemäß durch eine Abschleppstange eingangs genannter Art gelöst, bei der die Befestigungsmittel in einem befestigten Zustand um eine Sattelstütze des Erwachsenenfahrrads drehbar befestigt sind. Der Vorteil liegt darin, daß die Sattelstütze eines Fahrrads ein sehr stabiles, im allgemeinen zylindersymmetrisch ausgebildetes Bauteil ist, welches in der Lage ist große Kräfte aufzunehmen. Die Sattelstütze als Achse zu verwenden und die Befestigungsmittel als Teil eines Gelenks auszubilden führt dazu, daß Bauteile eingespart werden können. Diese führt zu einer Vereinfachung der Gesamtkonstruktion der Abschleppstange. Das eine für ein gutes Kurvenfahrverhalten des Gespanns Erwachsenenfahrrad-Kinderfahrrad benötigte Dreh- oder Schwenkgelenk wird somit an das eine äußerste Ende der Abschleppstange verlagert, was die Stabilität der Abschleppstange als ganzes verbessert.

Eine vorteilhafte Weiterbildung der Erfindung sieht vor, daß die Befestigungsmittel eine Schelle und ein Lager umfassen, wobei das Lager in dem befestigten Zustand zwischen der Sattelstütze und der Schelle anordenbar ist und die Sattelstütze zumindest teilweise umschließt. Zum einen können Lager unterschiedlicher Größe verwendet werden, um die Befestigungsmittel der Abschleppstange, das heißt die Schelle, an Sattelstützen unterschiedlichen Durchmessers anzupassen. Außerdem wird durch das Verwenden des Lagers eine reibungsarme Drehung der Abschleppstange um die Sattelstütze unabhängig von deren Oberflächenbeschaffenheit gewährleistet. Kratzer und Unebenheiten auf der Sattelstütze haben bei dieser Weiterbildung keinen Einfluß auf die Funktionseigenschaften des Gelenks.

Um ein Verdrehen des Lagers bezüglich der Sattelstütze zu vermeiden, sieht eine vorteilhafte Fortbildung der Erfindung vor, daß das Lager an einer Innenfläche Vorsprünge aufweist, die mit der Sattelstütze im befestigten Zustand wechselwirken können, so daß das Lager im befestigten Zustand bezüglich der Sattelstütze lagefest ist.

Eine Weiterbildung der Erfindung sieht vor, daß die Befestigungsmittel ausschließlich um eine Schwenkachse schwenkbar mit Hilfe eines Schwenkelements mit einem Stangenelement verbunden sind, wobei die Schwenkachse im befestigten Zustand senkrecht zu einer Längsachse der Sattelstütze ausgerichtet ist. Eine Anordnung des Gelenks zum Ausgleichen von Bodenunebenheiten der Fahrebene im Abschleppbetrieb nahe an den Befestigungsmitteln führt zu einer optimalen Krafteinleitung von Kräften in die Sattelstütze, die parallel zur Längsrichtung der Sattelstütze wirken. Ferner kann eine Halterung für die Schwenkachse an den Befestigungsmitteln besonders einfach stabil ausgestaltet werden. Da eine einstückige Herstellung der Befestigungsmittel mit dem Rest der Abschleppstange verfahrenstechnisch unmöglich ist bzw. sehr aufwendig wäre, ist es bei der Herstellung erforderlich einen Arbeitsschritt zum Verbinden der Befestigungsmittel mit dem Rest der Abschleppstange vorzusehen. An dieser Verbindungsstelle eine gelenkige Verbindung vorzusehen, ist somit konstruktiv vorteilhaft und paßt sich ebenfalls gut in den Fertigungsprozeß ein und ermöglicht somit eine besonders kostengünstige Herstellung.

Um eine leichte Anpaßbarkeit der Abschleppstange an verschiedene Größen des Erwachsenenfahrrads und/oder des Kinderfahrrads zu ermöglichen, umfaßt eine vorteilhafte Weiterbildung der Erfindung nicht teleskopierbare Höhenverstellmittel zum Einstellen einer Bodenfreiheit eines Vorderrads des Kinderfahrrads in einem angekoppelten Zustand.

Um die Abschleppstange in dem Zustand, in dem kein Kinderfahrrad angekoppelt ist, transportieren zu können, ohne daß andere Verkehrsteilnehmer gefährdet werden, umfaßt eine vorteilhafte Fortbildung der Erfindung ein weiteres Stangenelement, das schwenkbar zwischen einer Ankoppelstellung und einer Transportstellung mit Hilfe eines Scharniers mit dem Stangenelement verbunden ist. Hierdurch kann die Länge der Abschleppstange in ihrer Transportstellung verringert werden, so daß die Abschleppstange auf dem Gepäckträger des Erwachsenenfahrrads abgelegt und befestigt werden kann. In dieser Stellung sind alle Bestandteile der Abschleppstange zusätzlich gut gegen beim Fahren mit dem Fahrrad aufgewirbelten Dreck durch ein Schutzblech geschützt, das in der Regel zwischen dem Gepäckträger und dem Hinterrad des Fahrrads angeordnet ist. Eine Verschmutzung, wie sie bei einigen Abschleppstangen nach dem Stand der Technik auftreten kann, die in der Transportstellung seitlich am Fahrrad heruntergeklappt und im Bereich der Hinterradachse des Fahrrads befestigt werden, wird vermieden. Somit wird der Reinigungsbedarf bei dieser Fortbildung verringert.

Eine vorteilhafte Weiterbildung der Erfindung sieht vor, daß das Scharnier nur Schwenkbewegungen in derselben Ebene zuläßt, in der das Stangenelement bezüglich der Befestigungsmittel schwenkbar ist. Hierdurch wird erreicht, daß eine Kippbewegung, die zu einem Umkippen des Kinderfahrrads in einem angekoppelten Zustand führen könnte, durch das Scharnier unmöglich ist. Hierdurch wird die Gesamtstabilität der Abschleppstange gesteigert.

Eine weitere vorteilhafte Fortbildung der Erfindung sieht vor, daß das Scharnier in der Ankoppelstellung mit Hilfe von Arretierungsmitteln versteifbar ist. Durch die Versteifung des Scharniers in der Ankoppelstellung wird erreicht, daß die zum Ausgleichen von Bodenunebenheiten erforderlichen Bewegungen nur durch Schwenkbewegungen um die Schwenkachse ausgeglichen werden, die die Befestigungsmittel mit dem Stangenelement verbindet. Unerwünschte Schwingungszustände, wie sie bei mechanischen Systemen auftreten, die zwei miteinander gekoppelte Gelenke aufweisen, die einen gemeinsamen Freiheitsgrad aufweisen, werden so vermieden. Die Versteifung führt somit zu einer weiteren Steigerung der Stabilität der Abschleppstange.

Eine besonders vorteilhafte Ausgestaltung der Arretierungsmittel sieht vor, daß die Arretierungsmittel auf dem Stangenelement oder dem weiteren Stangenelement verschiebbar angeordnet sind und das Stangenelement und das weitere Stangenelement beim Versteifen zumindest teilweise umschließen. Diese Ausgestaltung ist zum einen leicht und kostengünstig herstellbar und zum anderen besonders stabil.

Eine einfache Anpassung der Bodenfreiheit des Vorderrads des Kinderrads in der angekoppelten Stellung wird erreicht, indem die Höhenverstellmittel eine relativ zu dem weiteren Stangenelement verlagerbare Knebelschraube umfassen, aufgrund deren Verlagerung ein minimaler Anstellwinkel eines an dem weiteren Stangenelement drehbar gelagerten Endabschnitts, mit dem die Ankoppelmittel verbunden sind, relativ zu dem weiteren Stangenelement veränderbar ist. Hierdurch wird der Anstellwinkel der Ankoppelmittel bezüglich dem Rest der Abschleppstange variiert, was direkt ein Anheben bzw. Absenken des Vorderrads bezüglich der Fahrebene nach sich zieht, wenn der vordere Teil des Rahmens des Kinderfahrrads mit den Ankoppelmitteln verbunden ist. Eine Knebelschraube ermöglicht eine stufenlose Einstellung der Bodenfreiheit im Gegensatz zu dem aus dem Stand der Technik bekannten Verfahren, die Höhenverstellung durch teleskopartige Verlängerung bzw. Verkürzung um vorgegebene Abschnitte der Abschleppstange zu erreichen.

Eine vorteilhafte Weiterbildung der Abschleppstange sieht vor, daß die Höhenverstellmittel zwei einander gegenüber angeordnete, voneinander beabstandete Führungsbleche umfassen, die mit einem Steg verbunden sind, der von einem Durchgangsgewindeloch durchdrungen ist, und wobei der Endabschnitt einen Führungsstift aufweist, der in mindestens einer kreissegmentförmigen Führungsnut in mindestens einem der Führungsbleche geführt wird, wobei die Schwenkbewegung des Endabschnitts durch die in dem Durchgangsgewindeloch verlagerbare Knebelschraube einschränkbar ist. Durch die seitlichen Führungsbleche und die mit dem Führungsstift wechselwirkende kreissegmentförmige Führungsnut wird die Schwenkbewegung des Endabschnitts und somit der Ankoppelmittel relativ zu dem Rest der Abschleppstange eingeschränkt. Zusätzlich werden durch die Führungsbleche auf den Endabschnitt einwirkende Kräfte quer zu einer Ebene, die durch die Führungsbleche aufgespannt wird, aufgenommen. Dies führt zu einer Entlastung des Drehgelenkstifts oder der Drehachse, mit Hilfe dessen/derer der Endabschnitt drehbar an dem weiteren Stangenelement gelagert ist.

Um eine besonders gute Anpassung an verschiedene Kinderfahrräder zu erreichen, sehen die Ankoppelmittel eine Ankoppelplatte mit mehreren Befestigungslöcher zum Aufnehmen von Klemmitteln vor, mit Hilfe derer ein Rahmen des Kinderfahrrads mit der Ankoppelplatte verbindbar ist. Um ein Verkippen des Kinderfahrrads im angekoppelten Zustand zu verhindern, sind mindestens zwei voneinander beabstandete Klemmittel erforderlich, die ein Rohr des Rahmens des Kinderfahrrads, vorzugsweise das Steuerrohr, anliegend an die Ankoppelplatte klemmen. Das Vorsehen von mehreren Lochpaaren ermöglicht die Nutzung einer Ankoppelplatte mit Kinderfahrrädern verschiedener Rahmengrößen.

Um ein schnelle Trennung des Kinderfahrrads von der Abschleppstange und/oder eine schnelle Loslösung der Abschleppstange von dem Erwachsenenfahrrad zu ermöglichen, sieht eine besonders vorteilhafte Weiterbildung der Abschleppstange vor, daß das Stangenelement und der Schwenkadapter und/oder der Endabschnitt und die Ankoppelmittel jeweils mit Hilfe einer Steck-Schraubverbindung lösbar verbunden sind. Eine Steckschraubverbindung, die eine Feststellschraube mit einem Handgriff umfaßt, kann einfach, ohne einen Einsatz von Werkzeugen gelöst oder festgezogen werden. Somit ist ein schnelles und einfaches An- und Abmontieren der Abschleppstange möglich. Die Abschleppstange kann ohne einen Einsatz von Werkzeugen ganz vom Erwachsenenfahrrad gelöst werden, und muß nicht in ihrer Transportstellung mitgeführt werden.

Die Erfindung wird im folgenden anhand eines Ausführungsbeispiels unter Bezugnahme auf eine Zeichnung näher erläutert. Hierbei zeigen:
- Figur 1: eine Abschleppstange in einer eingeklappten Transportstellung, wobei die Befestigungsmittel und die Ankoppelmittel von dem Rest der Abschleppstange getrennt sind;
- Figur 2: eine andere Ansicht der Abschleppstange nach Figur 1 in der eingeklappten Transportstellung;
- Figur 3: eine Teilansicht der Höhenverstellmittel der Abschleppstange nach Figur 1;
- Figur 4: eine andere Teilansicht der Abschleppstange nach Figur 1, die die Befestigungsmittel vergrößert darstellt;
- Figur 5: eine Ansicht der Abschleppstange nach Figur 1 in einer Ankoppelstellung;
- Figur 6: eine schematische Darstellung der Befestigungsmittel, die um eine Sattelstütze angeordnet sind;
- Figur 7: eine schematische Draufsicht auf die Befestigungsmittel, die um eine Sattelstütze angeordnet sind;
- Figur 8: eine schematische Zeichnung der Befestigungsmittel der Abschleppstange nach Figur 1;
- Figur 9: eine schematische Zeichnung des Schwenkadapters der Abschleppstange nach Figur 1;
- Figur 10: eine schematische Zeichnung des Stangenelements der Abschleppstange nach Figur 1;
- Figur 11: eine schematische Zeichnung des Schiebestücks der Abschleppstange nach Figur 1, das als Arretierungsmittel dient;
- Figur 12: eine schematische Zeichnung des Scharniers der Abschleppstange nach Figur 1;
- Figur 13: eine schematische Zeichnung eines Scharnierbolzens der Abschleppstange nach Figur 1;
- Figur 14: eine schematische Zeichnung des weiteren Stangenelements der Abschleppstange nach Figur 1;
- Figur 15: eine schematische Zeichnung des Endabschnitts der Abschleppstange nach Figur 1;
- Figur 16: eine schematische Zeichnung der Ankoppelmittel der Abschleppstange nach Figur 1;
- Figur 17: eine schematische Zeichnung eines Lagers; und
- Figur 18: eine schematische Zeichnung eines Abstützrings.

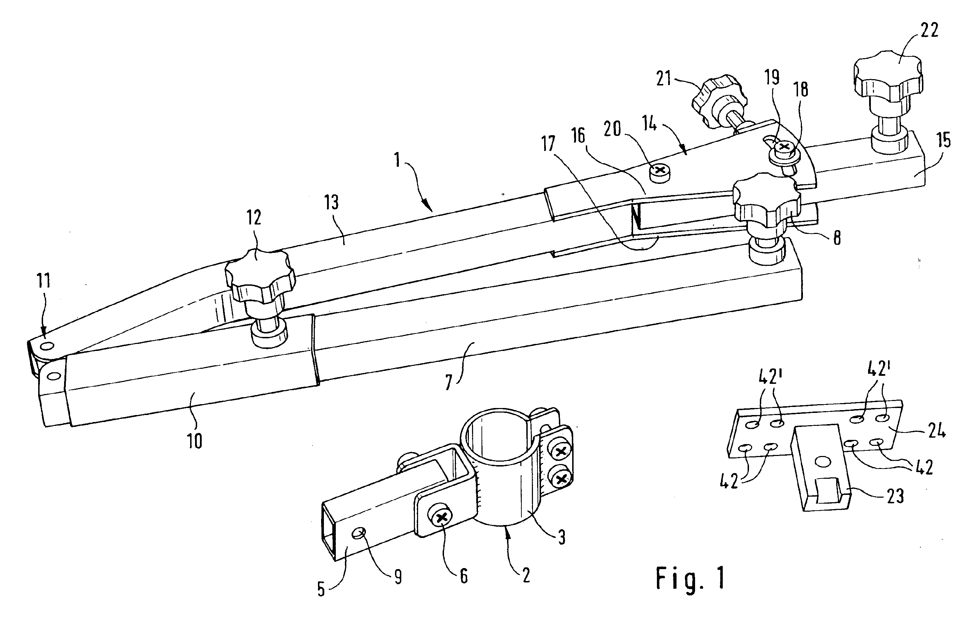

Figur 1 zeigt eine Abschleppstange 1 in einer eingeklappten Transportstellung. Befestigungsmittel 2 sind um eine Sattelstütze eines Erwachsenenfahrrads in einem befestigten Zustand anordenbar. In dem befestigten Zustand sind die Befestigungsmittel 2 um die Sattelstütze drehbar gelagert. Die Befestigungsmittel 2 sind als Schelle 3 ausgebildet, die mit Hilfe von zwei Schrauben an der Sattelstütze befestigt werden kann. Die Befestigungsmittel 2 sind mit einem Schwenkadapter 5 verbunden. Der Schwenkadapter 5 ist bezüglich der Befestigungsmittel 2 drehbar um eine Schwenkachse 6 gelagert. Die Schwenkachse 6 ist senkrecht zu einer Richtung ausgerichtet, in der eine Längsachse der Sattelstütze sich im befestigten Zustand durch die Schelle 3 der Befestigungsmittel 2 erstreckt.

Der Schwenkadapter 5 ist mit einem Stangenelement 7 mittels einer Steck-Schraubverbindung verbindbar, indem eine Feststellschraube 8 in eine Aussparung 9 des Schwenkadapters 5 in einem eingesteckten Zustand eingreift, in dem der Schwenkadapter 9 in das Stangenelement 7 eingeführt ist. Auf dem Stangenelement 7 ist ein Schiebestück 10 in einer nicht versteifenden Stellung eines Scharniers 11 gezeigt. In dieser Stellung ist das Schiebestück 10 mit Hilfe einer weiteren Feststellschraube 12 fixierbar.

Über das Scharnier 11 ist ein weiteres Stangenelement 13 an seinem einen Ende mit dem Stangenelement 7 verbunden. Das Scharnier 11 ist vorteilhafterweise so ausgestaltet, daß es nur einen eingeschränkten Schwenkbereich von beispielsweise 180° umfaßt. An einem anderen Ende weist das weitere Stangenelement 13 Höhenverstellmittel 14 auf. Die Höhenverstellmittel 14 umfassen einen Endabschnitt 15 der Abschleppstange. Der Endabschnitt 15 ist um einen Stift 20 relativ zu dem weiteren Stangenelement 13 schwenkbar gelagert. Der Endabschnitt 15 ist zwischen zwei Führungsblechen 16, 17 mit Hilfe eines Führungsstifts 18, welcher in kreissegmentförmige, in den Führungsblechen 16, 17 ausgesparte Führungsnuten 19 eingreift, geführt (vergleiche auch Figur 14). Eine Knebelschraube 21 grenzt den Schwenkbereich des Endabschnitts 15 relativ zu dem weiteren Stangenelement 13 ein.

Mit Hilfe einer anderen Feststellschraube 22 kann eine mit einem Steckadapter 23 versehene Ankoppelplatte 24 in gleicher Weise verbunden werden, wie der Schwenkadapter 5 mit dem Stangenelement 7 verbunden wird. An die Ankoppelplatte 24 kann der Teil des Rahmens eines Kinderfahrrads, vorzugsweise das Steuerrohr, angekoppelt werden, in dem die Gabel eines Vorderrads drehbar gelagert ist. Das Ankoppeln geschieht mit Klemmitteln, beispielsweise Abstützringen (die im Zusammenhang mit Figur 18 beschrieben sind), die mit Schrauben gegen die Ankoppelplatte geklemmt werden, wobei die Schrauben durch Befestigungslöcher 42, 42' in der Ankoppelplatte 24 greifen. Hierbei wird das Steuerrohr des Kinderfahrrads zwischen die Abstützringe und die Ankoppelplatte 24 geklemmt, so daß das Steuerrohr an der Ankoppelplatte 24 anliegt.

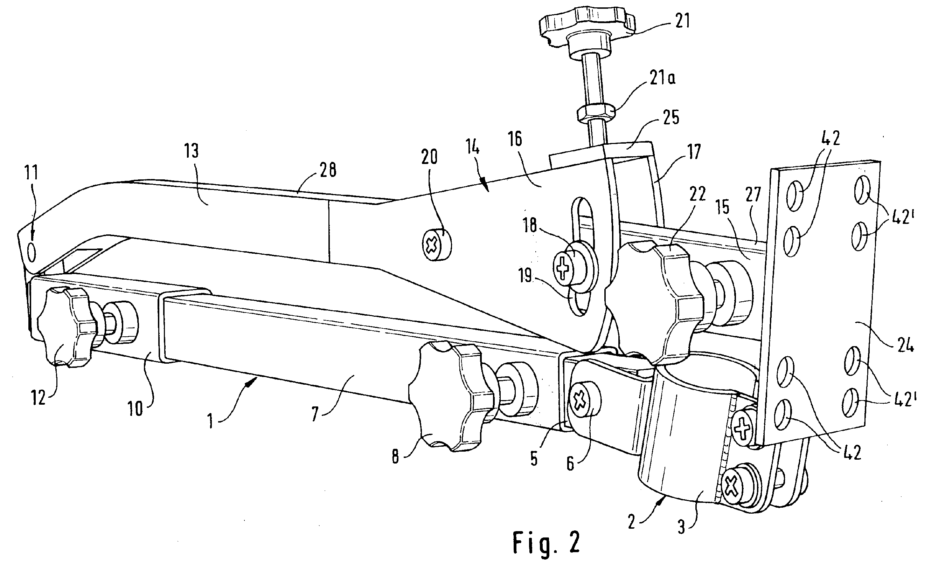

Figur 2 zeigt eine andere Ansicht der Abschleppstange 1 in der eingeklappten Transportstellung, wobei die Befestigungsmittel 2 mit Hilfe des Schwenkadapters 5 über die Steck-Schraubverbindung mit dem Stangenelement 7 verbunden sind und ferner die Ankoppelmittel, d. h. die Ankoppelplatte 24, mit Hilfe des Steckadapters (nicht sichtbar) mit dem Endabschnitt 15 verbunden sind.

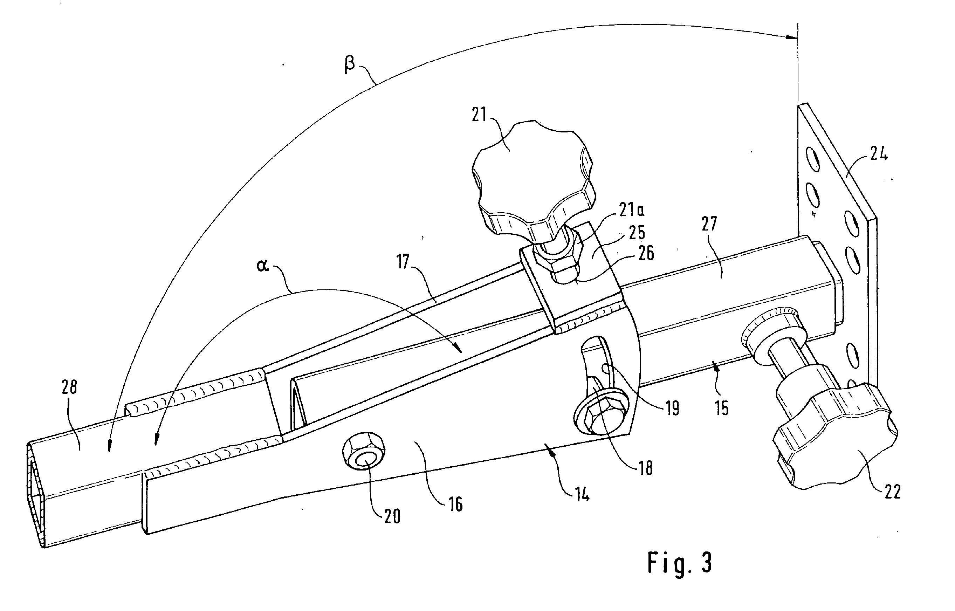

Figur 3 zeigt einen Teilabschnitt der Abschleppstange 1 mit den Höhenverstellmitteln 14, die einen Anstellwinkel α des Endabschnitts 15 bezüglich des weiteren Stangenelements 13 bzw. einen Winkel β der Ankoppelplatte 24 bezüglich des weiteren Stangenelements 13 beeinflussen. Die Führungsbleche 16, 17 sind durch einen Steg 25 verbunden, in dem ein Durchgangsgewindeloch 26 ausgebildet ist (vgl. auch Figur 14). In dem Durchgangsgewindeloch 26 ist die Knebelschraube 21 angeordnet. Durch ein Einschrauben der Knebelschraube 21 wird der Endabschnitt 15 von dem Steg 25 weg gedrückt, wodurch der Anstellwinkel α gemessen von einer Oberseite 27 des Endabschnitts 15 zu einer Oberseite 28 des weiteren Stangenelements 13 vergrößert wird. Hierdurch erhöht sich eine Bodenfreiheit eines Vorderrads des mit der Ankoppelplatte 24 verbundenen Kinderfahrrads. Ein Herausschrauben oder teilweises Herausschrauben der Knebelschraube 21 aus dem Durchgangsgewindeloch 26 bewirkt eine Verringerung des Anstellwinkels α bzw. des Winkels β, wodurch sich das Vorderrad absenkt. Die Knebelschraube 21 kann mit Hilfe einer Mutter 29 arretiert werden, indem die Mutter gegen den Steg 25 verschraubt wird.

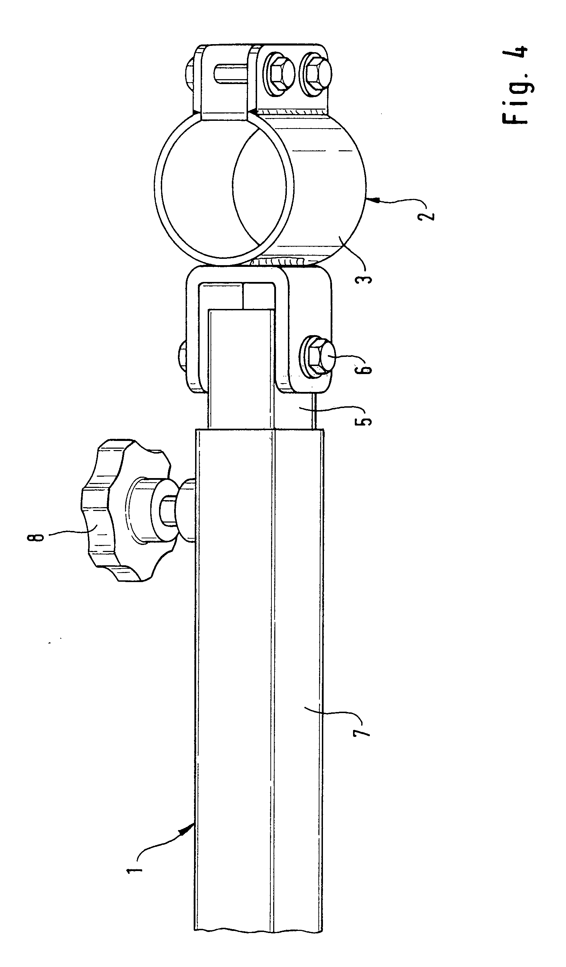

Figur 4 zeigt eine andere Teilansicht der Abschleppstange 1. Die Steck-Schraubverbindung zwischen dem Schwenkadapter 5 und dem Stangenelement 7 ist mit Hilfe der Feststellschraube 8 arretiert.

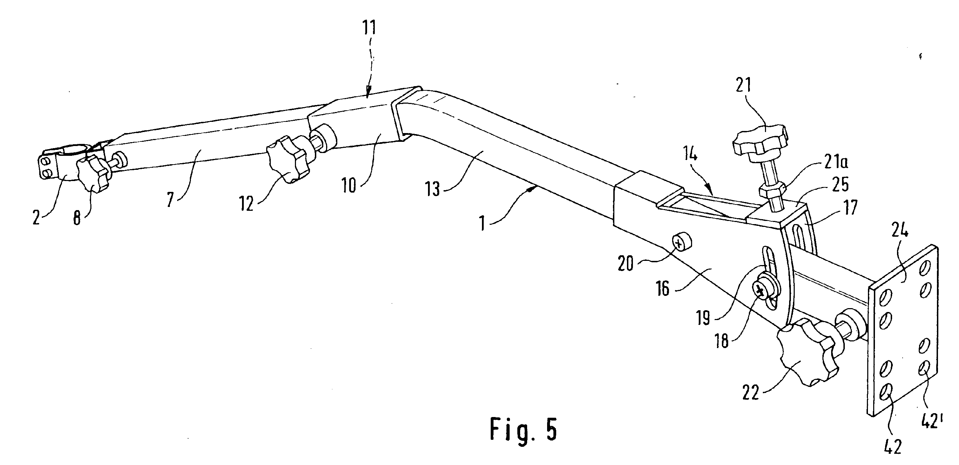

Figur 5 zeigt die Abschleppstange 1 in einer ausgeklappten Ankoppelstellung. Das Schiebestück 10 ist über das Scharnier 11, welches folglich nicht sichtbar ist, geschoben, um das Scharnier 11 zu versteifen. Das Schiebestück 10 ist mit Hilfe der weiteren Feststellschraube 12 in einer versteifenden Stellung arretiert.

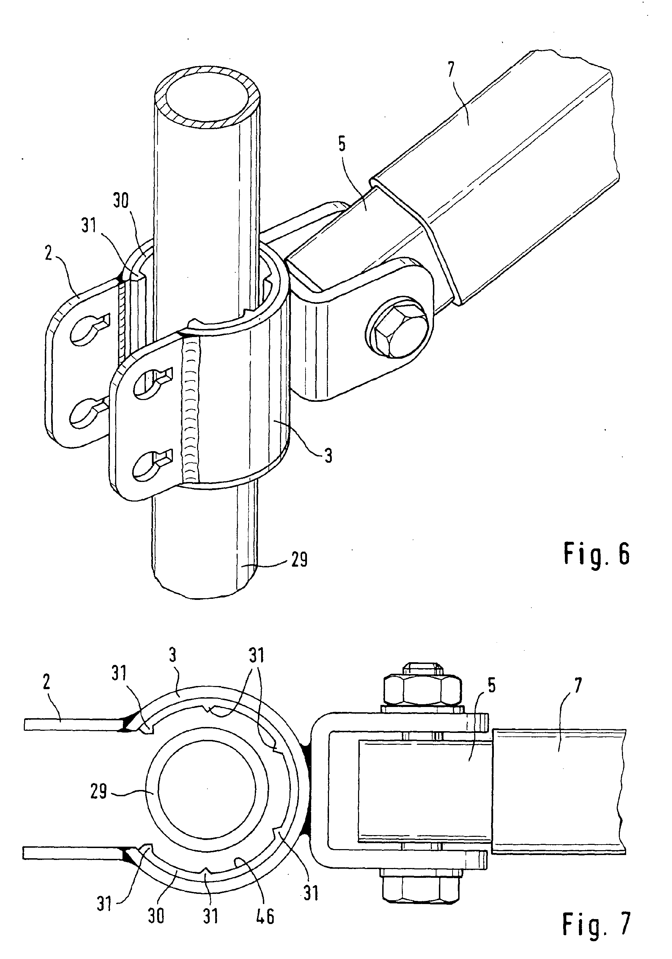

Figuren 6 und 7 zeigen eine schematische isometrische Ansicht (Figur 6) und eine schematische Draufsicht (Figur 7) der Befestigungsmittel 2, die um eine Sattelstütze 29 angeordnet sind. Zwischen der Sattelstütze 29 und der Schelle 3 der Befestigungsmittel 2 ist jeweils ein Lager 30 angeordnet. Das Lager 30 umschließt die Sattelstütze 29 zumindest teilweise. Das Lager 30 weist an einer Innenfläche 46 Vorsprünge 31 auf, die mit der Sattelstütze 29 wechselwirken, um das Lager 30 bezüglich der Sattelstütze 29 lagefest zu halten. In Figuren 6 und 7 ist deutlich zu erkennen, daß das Stangenelement 7 gemeinsam mit dem Schwenkadapter 5 bezüglich der Befestigungsmittel 2 um eine Schwenkachse 6 (vgl. Figur 1) schwenkbar ist, die senkrecht zu der Sattelstütze 29 ausgerichtet ist, wenn die Befestigungsmittel 2 an der Sattelstütze 29 befestigt sind.

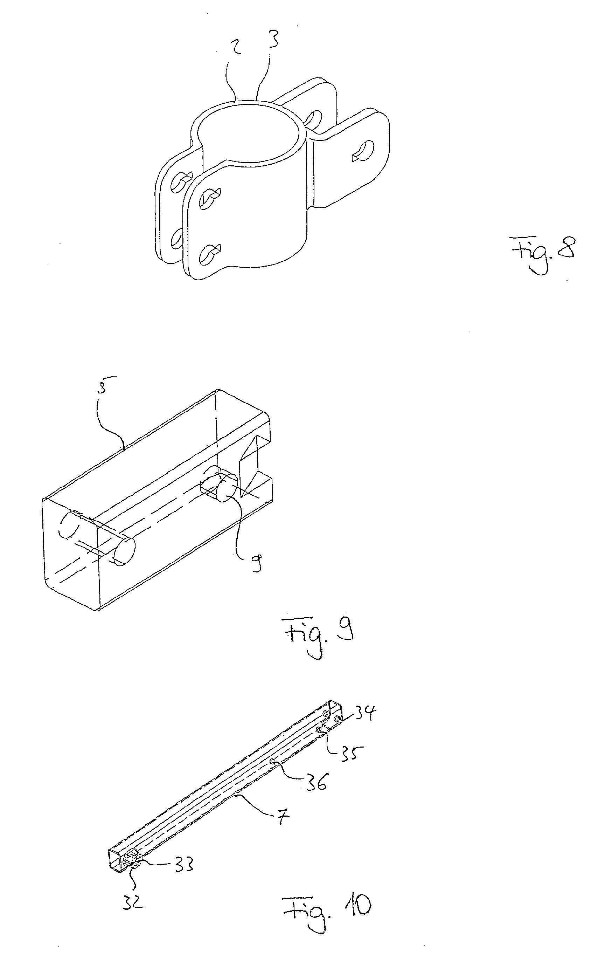

Die Figuren 8 bis 18 sind schematische Zeichnungen der einzelnen Bauteile der Abschleppstange 1, die in den Figuren 1 bis 5 gezeigt ist. Figur 8 zeigt die als Schelle 3 ausgestalteten Befestigungsmittel 2. Figur 9 zeigt den Schwenkadapter 5, bei dem die Aussparung 9 deutlich zu erkennen ist, in die die Feststellschraube 8 (vgl. Figur 2) eingreift, wenn der Schwenkadapter 5 in das Stangenelement 7 (vgl. Figur 2) eingesteckt ist, um die Steck-Schraubverbindung zu arretieren.

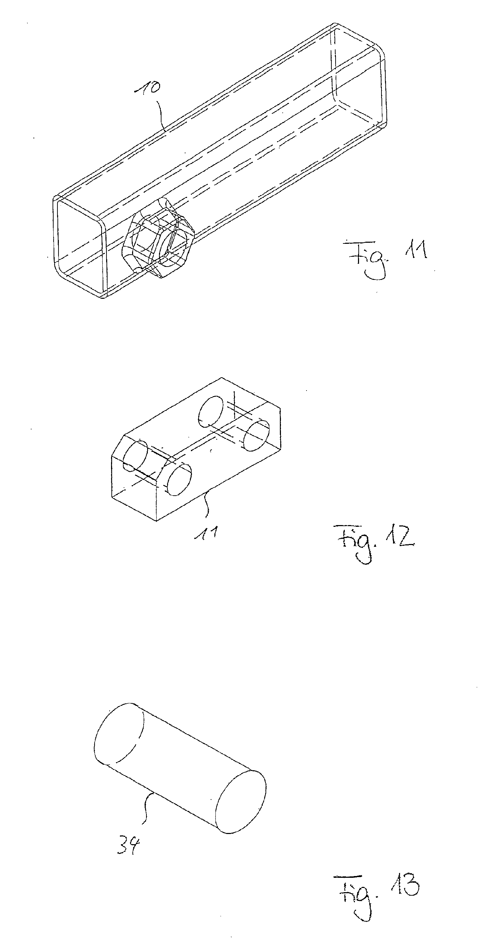

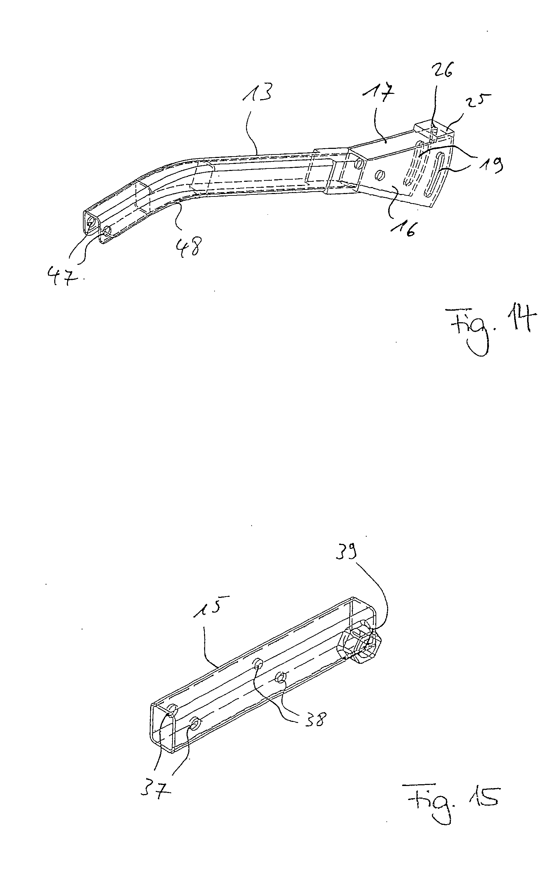

Figur 10 zeigt das Stangenelement 7, das einen sechseckigen Vorsprung 32 umfaßt, in dem ein Gewinde 33 zum Aufnehmen der Feststellschraube 8 (vgl. Figur 1) ausgebildet ist. Löcher 34 sind zum Aufnehmen eines Scharnierbolzens (vgl. Figur 13) vorgesehen. Weitere Löcher 35 und 36 sind zum Aufnehmen der weiteren Feststellschraube 12 (vgl. Figur 1) vorgesehen, um das Schiebestück 10, das in Figur 11 dargestellt ist, in der versteifenden Stellung bzw. nicht versteifenden Stellung zu arretieren (vgl. Figuren 1 und 5). Figur 12 zeigt das Scharnier 11 zum Verbinden des Stangenelements 7 mit dem weiteren Stangenelement 13 (vgl. Figur 1) und Figur 13 einen dazugehörigen Scharnierbolzen 34.

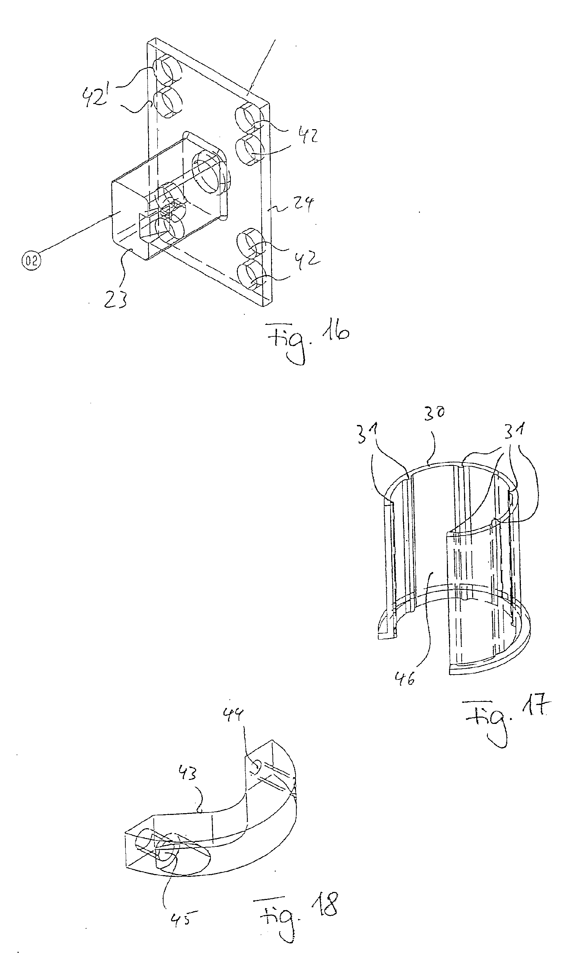

Figur 14 zeigt das weitere Stangenelement 13. Löcher 47 sind zum Aufnehmen des Scharnierbolzens 34 vorgesehen. Das weitere Stangenelement 13 weist eine Krümmung 48 auf, um einen Höhenunterschied des Erwachsenenfahrrads zu dem Kinderfahrrad zumindest grob auszugleichen bzw. den Anstellwinkel α oder den Winkel β voreinzustellen, die jeweils die Bodenfreiheit des Vorderrads des Kinderfahrrads in der angekoppelten Stellung festlegen. Der in Figur 15 dargestellte Endabschnitt 15 weist zum einen Löcher 37 zum Aufnehmen eines Stifts auf, um den der Endabschnitt bezüglich des weiteren Stangenelements im zusammengebauten Zustand schwenkbar ist. Führungsstiftlöcher 38 sind zum Aufnehmen des Führungsstifts 18 (vgl. Figur 3) vorgesehen. Ein sechseckiger Vorsprung 39 mit einem Gewindeloch 40 ist vorgesehen, um die andere Feststellschraube 22 (vgl. Figur 2) aufzunehmen, die die Steck-Schraubverbindung des Steckadapters 23 der Ankoppelplatte 24 arretiert (vgl. Figuren 2 und 16).

Die Ankoppelmittel, die die Ankoppelplatte 24 und den Steckadapter 23 umfassen, sind in Figur 16 dargestellt. Der Steckadapter 23 weist eine andere Vertiefung 41 auf, in die die andere Feststellschraube 22 beim Arretieren der Steck-Schraubverbindung eingreift (vgl. Figur 2). In der Ankoppelplatte 24 sind mehrere Befestigungslöcher 42, 42' jeweils paarweise ausgebildet. Durch die mehreren Löcher 42, 42' greifen Schrauben, mit deren Hilfe in Figur 18 dargestellte Abstützringe 43 ein Steuerrohr des Rahmens des Kinderfahrrads gegen die Ankoppelplatte 24 klemmen, so daß das Steuerrohr gegen die Ankoppelplatte 24 anliegt. Der Abstützring 43 weist zwei Bohrungen 44, 45 auf, von denen eine 44 ein Gewinde aufweist. Um das Kinderfahrrad an die Abschleppstange 1 anzukoppeln, so daß ein Verkippen des Kinderfahrrads beim Schleppen vermieden wird, ist es erforderlich, das Steuerrohr des Kinderfahrradrahmens mindestens mit zwei Abstützringen 43 gegen die Ankoppelplatte 24 zu verklemmen.

Figur 17 stellt eine schematische Zeichnung des Lagers 30 dar, das um die Sattelstütze des Erwachsenenfahrrads angeordnet wird. Deutlich zu erkennen sind die Vorsprünge 34 auf der Innenfläche 46.

Die in der vorstehenden Beschreibung und den Zeichnungen offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Abschleppstange (1) zum Ankoppeln eines Kinderfahrrads an ein Erwachsenenfahrrad mit Befestigungsmitteln (2) zum Befestigen an dem Erwachsenenfahrrad und Ankoppelmitteln zum Ankoppeln des Kinderfahrrads, **dadurch gekennzeichnet, daß** die Befestigungsmittel (2) in einem befestigten Zustand um eine Sattelstütze (29) des Erwachsenenfahrrads drehbar befestigt sind.

2. Abschleppstange (1) nach Anspruch 1, **dadurch gekennzeichnet, daß** die Befestigungsmittel (2) eine Schelle (3) und ein Lager (30) umfassen, wobei das Lager (30) in dem befestigten Zustand zwischen der Sattelstütze (29) und der Schelle (3) anordenbar ist und die Sattelstütze (29) zumindest teilweise umschließt.

3. Abschleppstange (1) nach Anspruch 2, **dadurch gekennzeichnet, daß** das Lager (30) an einer Innenfläche (46) Vorsprünge (34) aufweist, die mit der Sattelstütze (29) im befestigten Zustand wechselwirken können, so daß das Lager (30) im befestigten Zustand bezüglich der Sattelstütze (29) lagefest ist.

4. Abschleppstange (1) nach einem der Ansprüche 1 bis 3, **dadurch gekennzeichnet, daß** die Befestigungsmittel (2) ausschließlich um eine Schwenkachse (6) schwenkbar mit Hilfe eines Schwenkelements (5) mit einem Stangenelement (7) verbunden sind, wobei die Schwenkachse (6) im befestigten Zustand senkrecht zu einer Längsachse der Sattelstütze (29) ausgerichtet ist.

5. Abschleppstange (1) nach Anspruch 4 oder 5, **gekennzeichnet durch** nicht teleskopierbare Höhenverstellmittel (14) zum Einstellen einer Bodenfreiheit eines Vorderrads des Kinderfahrrads in einem angekoppelten Zustand.

6. Abschleppstange (1) nach einem der vorangehenden Ansprüche, **gekennzeichnet durch** ein weiteres Stangenelement (13), das schwenkbar zwischen einer Ankoppelstellung und einer Transportstellung mit Hilfe eines Scharniers (11) mit dem Stangenelement (7) verbunden ist.

7. Abschleppstange (1) nach Anspruch 6, **dadurch gekennzeichnet, daß** das Scharnier (11) nur Schwenkbewegungen in derselben Ebene zuläßt, in der das Stangenelement (7) bezüglich der Befestigungsmittel (2) schwenkbar ist.

8. Abschleppstange (1) nach Anspruch 6 oder 7, **dadurch gekennzeichnet, daß** das Scharnier (11) in der Ankoppelstellung mit Hilfe von Arretierungsmitteln (10) versteifbar ist.

9. Abschleppstange (1) nach Anspruch 8, **dadurch gekennzeichnet, daß** die Arretierungsmittel (10) auf dem Stangenelement (7) oder dem weiteren Stangenelement (13) verschiebbar angeordnet sind und das Stangenelement (7) und das weitere Stangenelement (13) beim Versteifen zumindest teilweise umschließen.

10. Abschleppstange (1) nach einem der Ansprüche 5 bis 9, **dadurch gekennzeichnet, daß** die Höhenverstellmittel (14) eine relativ zu dem weiteren Stangenelement (13) verlagerbare Knebelschraube (21) umfassen, aufgrund deren Verlagerung ein minimaler Anstellwinkel (α) eines an dem weiteren Stangenelement (13) drehbar gelagerten Endabschnitts (15), mit dem die Ankoppelmittel verbunden sind, relativ zu dem weiteren Stangenelement (13) veränderbar ist.

11. Abschleppstange (1) nach Anspruch 10, **dadurch gekennzeichnet, daß** die Höhenverstellmittel (14) zwei einander gegenüber angeordnete, voneinander beabstandete Führungsbleche (16, 17) umfassen, die mit einem Steg (25) verbunden sind, der von einem Durchgangsgewindeloch (26) durchdrungen ist, und wobei der Endabschnitt (15) einen Führungsstift (18) aufweist, der in mindestens einer kreissegmentförmigen Führungsnut (19) in mindestens einem der Führungsbleche (16, 17) geführt wird, wobei die Schwenkbewegung des Endabschnitts (15) durch die in dem Durchgangsgewindeloch (26) verlagerbare Knebelschraube (21) einschränkbar ist.

12. Abschleppstange (1) nach einem der vorangehenden Ansprüche, **dadurch gekennzeichnet, daß** die Ankoppelmittel eine Ankoppelplatte (24) mit mehreren Befestigungslöchern (42, 42') zum Aufnehmen von Klemmitteln umfassen, mit Hilfe derer ein Rahmen des Kinderfahrrads mit der Ankoppelplatte (24) verbindbar ist.

13. Abschleppstange (1) nach einem der Ansprüche 4 bis 12, **dadurch gekennzeichnet, daß** das Stangenelement (7) und der Schwenkadapter (5) und/oder der Endabschnitt (15) und die Ankoppelmittel jeweils mit Hilfe einer Steck-Schraubverbindung lösbar verbunden sind.
